# EUROPÄISCHE PATENTANMELDUNG

(11) **EP 4 744 946 A1**
(43) Veröffentlichungstag der Anmeldung: **20.05.2026**
(21) Anmeldenummer: 25213146.1
(22) Anmeldetag: 03.11.2025
(51) Int. Cl.: B60L 53/14, B60L 53/24, H02M 1/088

(54) **TRAKTIONSNETZ FÜR EIN ELEKTROFAHRZEUG**

(30) Priorität: 18.11.2024 DE 102024133664
(71) Anmelder: Volkswagen Aktiengesellschaft, 38440 Wolfsburg (DE)
(72) Erfinder: Schiedermeier, Maximilian, 38440 Wolfsburg (DE); Gaona, Daniel, 38440 Wolfsburg (DE)

(57) **Zusammenfassung**

Die Erfindung betrifft ein Traktionsnetz (1) für ein Elektrofahrzeug, umfassend eine Hochvoltbatterie (2), einen Pulswechselrichter (3), eine Elektromaschine (4), einen AC-Ladeanschluss (6) und mindestens eine Steuereinheit (9) für den Pulswechselrichter (3), wobei der Pulswechselrichter (3) mindestens drei Halbbrücken aufweist, wobei die Halbbrücken jeweils einen High-Side-Schalter (HS) und einen Low-Side-Schalter (LS) aufweisen, wobei die High-Side-Schalter (HS) und die Low-Side-Schalter (LS) jeweils aus n parallelen Leistungstransistoren bestehen, wobei n ≥ 2 ist, wobei den High-Side-Schalten (HS) und den Low-Side-Schaltern (LS) jeweils mindestens ein Gate-Treiber (8) zugeordnet ist, wobei der mindestens eine Gate-Treiber (8) Einzelgate-Ansteuerungen aufweist, wobei die Einzelgate-Ansteuerungen jeweils einem oder mehreren Leistungstransistoren zugeordnet sind, oder der mindestens eine Gate-Treiber (8) eine Gateansteuerung für die n Leistungstransistoren aufweist, wobei in den Zuleitungen (10) von der Gateansteuerung des Gate-Treibers (8) zu den Gates der Leistungstransistoren jeweils mindestens ein weiteres Schaltelement (11) zugeordnet ist, wobei die Steuereinheit (9) derart ausgebildet ist, im Traktionsbetrieb die Leistungstransistoren mit einer ersten Schaltfrequenz f1 zu betreiben und in einem AC-Ladebetrieb die Leistungstransistoren mit einer zweiten Schaltfrequenz f2 zu betreiben, wobei f2 > f1 ist, wobei im AC-Ladebetrieb einzelne Leistungstransistoren der High-Side-Schalter (HS) und Low-Side-Schalter (LS) nicht angesteuert werden.

## Beschreibung

Die Erfindung betrifft ein Traktionsnetz für ein Elektrofahrzeug.

Traktionsnetze für Elektrofahrzeuge weisen häufig eine Hochvoltbatterie, einen Pulswechselrichter, eine Elektromaschine und mindestens eine Steuereinheit für den Pulswechselrichter auf. Um die Hochvoltbatterie von außen laden zu können, sind weiter On-Board-Ladegeräte bekannt, die einen AC-Ladeanschluss für ein ein- oder dreiphasiges Wechselspannungsnetz aufweisen. Mittels des On-Board-Ladegerätes wird dann die Wechselspannung in eine Gleichspannung für die Hochvoltbatterie gewandelt. Dabei kann das On-Board-Ladegerät eine vollständig separate Einheit sein.

Zum Einsparen von Bauteilen sind bereits Vorschläge gemacht worden, die aktive Technik des On-Board-Ladegerätes in den Pulswechselrichter zu integrieren, also dessen Bauteile doppelt zu nutzen. Die High-Side-Schalter und Low-Side-Schalter sind dabei auch ausreichend dimensioniert, da die Traktionsströme im Volllastbetrieb erheblich höher sind als die Ladeströme. Um die Größe der PFC-Drosseln für den Ladebetrieb zu reduzieren, ist es wünschenswert, die High-Side-Schalter und Low-Side-Schalter im Ladebetrieb mit möglichst hoher Schaltfrequenz anzusteuern. Dies erfordert aber eine hohe Leistung der Gate-Treiber.

Der Erfindung liegt das technische Problem zugrunde, ein Traktionsnetz für ein Elektrofahrzeug zu schaffen, bei dem der Pulswechselrichter mit hoher Schaltfrequenz im AC-Ladebetrieb angesteuert werden kann, ohne die Leistung der Gate-Treiber zu erhöhen.

Die Lösung des technischen Problems ergibt sich durch ein Traktionsnetz mit den Merkmalen des Anspruchs 1. Weitere vorteilhafte Ausgestaltungen der Erfindung ergeben sich aus den Unteransprüchen.

Das Traktionsnetz für ein Elektrofahrzeug umfasst eine Hochvoltbatterie, einen Pulswechselrichter, eine Elektromaschine, einen AC-Ladeanschluss und mindestens eine Steuereinheit für den Pulswechselrichter. Der Pulswechselrichter weist mindestens drei Halbbrücken auf, wobei die Halbbrücken jeweils einen High-Side-Schalter und einen Low-Side-Schalter aufweisen. Die High-Side-Schalter und die Low-Side-Schalter bestehen jeweils aus n parallelen Leistungstransistoren, wobei n ≥ 2 ist. Dabei sind parallel zu den Leistungstransistoren Freilaufdioden angeordnet, die entweder als intrinsische Dioden vorhanden sind (z.B. bei MOSFETs) oder als separate Bauelemente ausgebildet sind (z.B. IGBTs). Weiter ist den High-Side-Schaltern und den Low-Side-Schaltern jeweils mindestens ein Gate-Treiber zugeordnet. Dabei weist der mindestens eine Gate-Treiber Einzelgate-Ansteuerungen auf, wobei die Einzelgate-Ansteuerungen jeweils einem oder mehreren Leistungstransistoren zugeordnet sind. Alternativ weist der mindestens eine Gate-Treiber für die n Leistungstransistoren eine Gateansteuerung auf bzw. wenn zwei Gate-Treiber vorhanden sind jeweils eine Gateansteuerung für n/2 Leistungstransistoren usw., wobei in den Zuleitungen von der Gateansteuerung des Gate-Treibers zu den Gates der Leistungstransistoren jeweils mindestens ein weiteres Schaltelement angeordnet ist, das vorzugsweise als Transistor ausgebildet ist. Weiter ist die Steuereinheit derart ausgebildet, im Traktionsbetrieb die Leistungstransistoren mit einer ersten Schaltfrequenz f1 zu betreiben und in einem AC-Ladebetrieb die Leistungstransistoren mit einer zweiten Schaltfrequenz f2 zu betreiben, wobei f2 > f1 ist, wobei im AC-Ladebetrieb einzelne Leistungstransistoren der High-Side-Schalter und der Low-Side-Schalter nicht angesteuert werden. Hierdurch wird Leistung bei dem Gate-Treiber eingespart, da weniger Leistungstransistoren angesteuert werden, wobei die so eingesparte Leistung für die Erhöhung der Schaltfrequenz zur Verfügung steht. Da der Ladestrom im AC-Ladebetrieb deutlich geringer als im Volllast-Betrieb im Traktionsmodus ist, stellt dies hinsichtlich der Stromtragfähigkeit für die Leistungstransistoren kein Problem dar. Werden beispielsweise vier Leistungstransistoren je Schalter parallel geschaltet, die in einem Traktionsbetrieb mit einer Schaltfrequenz f1 von 20 - 25 kHz getaktet werden, so kann im AC-Ladebetrieb ein Leistungstransistor mit einer Schaltfrequenz f2 von 80 - 100 kHz getaktet werden, wobei die Leistung des Gate-Treibers gleichbleibt.

Dies kann über die Einzelgate-Ansteuerungen oder die weiteren Schaltelemente realisiert werden, sodass gezielt einzelne Leistungstransistoren nicht im AC-Ladebetrieb angesteuert werden.

In einer Ausführungsform ist die Steuereinheit derart ausgebildet, im AC-Ladebetrieb die Leistungstransistoren mit einem diskontinuierlichen Modulationsverfahren anzusteuern, insbesondere mit einem DCM (Discontinuous Curent Mode)- oder TCM (Triangular Current Mode)-Modulationsverfahren anzusteuern. Dabei wird ausgenutzt, dass bei diesen Modulationsverfahren der Strom durch die PFC-Drosseln immer kurzzeitig geringfügig in den negativen Bereich getrieben werden kann (sich also die Stromrichtung durch die PFC-Drossel umkehrt). Hierdurch können die Ausgangskapazitäten der Leistungstransistoren (auch der, die nicht geschaltet werden) über die Freilaufdioden umgeladen werden, sodass die Verlustleistung beim Einschalten eines oder mehrerer Leistungstransistoren reduziert werden kann, da ansonsten die Umladung der Ausgangskapazitäten über die durchgeschalteten Leistungstransistoren erfolgen würden.

In einer weiteren Ausführungsform ist der Pulswechselrichter als 3-Level-Pulswechselrichter ausgebildet.

In einer weiteren Ausführungsform sind zwischen dem AC-Ladeanschluss und dem Pulswechselrichter Schaltelemente angeordnet, wobei das Traktionsnetz derart ausgebildet ist, im AC-Ladebetrieb die Schaltelemente zu schließen und im Traktionsbetrieb zu öffnen.

Die Schaltelemente können Relais oder Halbleiterschalter (z.B. Transistoren) sein. Hierdurch können die verschiedenen Filter und PFC-Drosseln im Traktionsbetrieb weggeschaltet werden und der AC-Ladeanschluss ist spannungsfrei.

In einer alternativen Ausführungsform sind zwischen dem AC-Ladeanschluss und der Elektromaschine Schaltelemente angeordnet und zwischen einem Sternpunkt der Elektromaschine und den Phasenleitungen Schaltelemente angeordnet, wobei das Traktionsnetz derart ausgebildet ist, im AC-Ladebetrieb die Schaltelemente zwischen dem AC-Ladeanschluss und der Elektromaschine zu schließen und die Schaltelemente an dem Sternpunkt zu öffnen, wobei im Traktionsbetrieb die Schaltelemente zwischen dem AC-Ladeanschluss und der Elektromaschine geöffnet werden und die Schaltelemente an dem Sternpunkt geschlossen werden. Hierdurch können die Induktivitäten der Wicklungen der Elektromaschine genutzt werden, sodass die PFC-Drosseln weiter reduziert werden können bzw. im Extremfall entfallen können.

In einer weiteren Ausführungsform ist die Elektromaschine als fremderregte Synchronmaschine ausgebildet. Dies ist besonders bei der zuletzt erwähnten Ausführungsform von Vorteil, da durch die Bestromung der Statorwicklungen im AC-Ladebetrieb kein Antriebsmoment erzeugt wird, wenn die Rotorsteuerung abgeschaltet ist.

In einer weiteren Ausführungsform ist die Steuereinheit derart ausgebildet, im Traktionsbetrieb bei Schwach- oder Teillast einzelne Leistungstransistoren der High-Side-Schalter und Low-Side-Schalter nicht anzusteuern. Hierdurch kann im Traktionsbetrieb in diesen Betriebspunkten Verlustleistung eingespart werden.

In einer weiteren Ausführungsform sind die Leistungstransistoren der High-Side-Schalter und der Low-Side-Schalter als SiC-MOSFETs oder IGBTs ausgebildet, wobei die Transistoren im Mittelpfad als GaN HEMTs ausgebildet sind. Bei einer 3-Level-Topologie treten die Schaltverluste im AC-Ladebetrieb hauptsächlich im Mittelpfad auf. Der jeweilige High-Side-Schalter und Low-Side-Schalter schaltet mit ZVS (zero voltage switching), da der Strom vor deren Einschaltvorgängen durch die Freilaufdiode fließt. Daher sind die Schaltverluste im Mittelpfad konzentriert. Bei Verwendung der diskontinuierlichen Modulationsverfahren wie beispielsweise DCM oder TCM sind die Einschaltverluste eliminiert, die Ausschaltverluste (Peak-Strome des Dreieckstromverlaufs) sind erhöht. Allerdings sind die Ausschaltverluste insbesondere bei GaN HEMTs vielfach geringer als die Einschaltverluste.

In einer weiteren Ausführungsform sind die weiteren Schaltelemente in den Zuleitungen von der Gateansteuerung des Gate-Treibers zu den Gates der Leistungstransistoren als MOSFETs ausgebildet. Im leitenden Zustand führen die MOSFETs zu keiner nennenswerten Veränderung der Einschaltcharakteristik der Leistungstransistoren. Ferner wird über die intrinsische Bodydiode des zu- und abschaltenden MOSFET lediglich die positive Spannung gesperrt, wobei ein Ausschalten mittels einer negativen Gate-Spannung über die Bodydiode auf das Gate des Leistungstransistors dennoch gewährleistet ist.

Die Erfindung wird nachfolgend anhand bevorzugter Ausführungsbeispiele näher erläutert. Die Figuren zeigen:
- Fig. 1: ein schematisches Blockschaltbild eines Traktionsnetzes in einer ersten Ausführungsform,
- Fig. 2: ein schematischer Verlauf eines Stromes durch die PFC-Drosseln bei einer DCM-Modulation,
- Fig. 3: ein schematisches Blockschaltbild eines Traktionsnetzes in einer zweiten Ausführungsform und
- Fig. 4: ein schematisches Blockschaltbild eines Traktionsnetzes in einer dritten Ausführungsform.

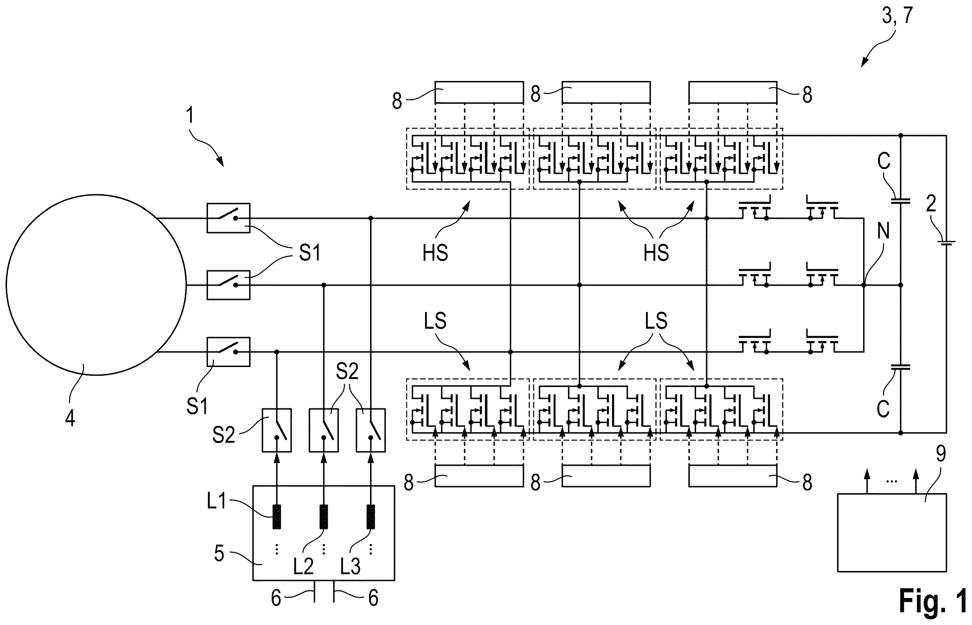

In der Fig. 1 ist schematisch ein Traktionsnetz 1 in einer ersten Ausführungsform dargestellt. Das Traktionsnetz 1 weist eine Hochvoltbatterie 2, einen Pulswechselrichter 3, eine Elektromaschine 4 und eine Ladebox 5 auf, die AC-Ladeanschlüsse 6 für eine externe, nicht dargestellte Wechselspannungsquelle aufweist. Der Pulswechselrichter 3 ist als 3-Level-Pulswechselrichter 7 ausgebildet, der einen Neutralpunkt N aufweist. Parallel zu der Hochvoltbatterie 2 ist ein Zwischenkreiskondensator angeordnet, der aus einer Reihenschaltung von zwei Kondensatoren C gebildet wird, deren Mittelabgriff mit dem Neutralpunkt N verbunden ist. Die Ladebox 5 weist PFC-Drosseln L1-L3 sowie diverse Filter auf, die hier nicht dargestellt sind und zwischen den PFC-Drosseln L1-L3 und den AC-Ladeanschlüssen 6 angeordnet sind, was durch die Punkte angedeutet ist. Der Pulswechselrichter 3 weist drei Halbbrücken auf, wobei die Mittelabgriffe der drei Halbbrücken über erste Schaltelemente S1 mit den drei Phasen der Elektromaschine 4 verbunden sind und über zweite Schaltelemente S2 mit den PFC-Drosseln L1-L3 verbunden sind. Jede Halbbrücke weist einen High-Side-Schalter HS und einen Low-Side-Schalter LS auf, wobei jeder High-Side-Schalter HS und jeder Low-Side-Schalter LS aus vier parallelen Leistungstransistoren besteht, die als MOSFETs ausgebildet sind. Die MOSFEs weisen jeweils eine intrinsische Body-Diode auf, die die Funktion einer Freilaufdiode übernimmt. Die Body-Dioden sind hier aus Übersichtsgründen nicht dargestellt. Im Mittelpfad des 3-Level-Pulswechselrichters 7 sind jeweils zwei gegensinnig verschaltete MOSFETs oder GaN HEMTs angeordnet, wobei alle Mittelpfade mit dem Neutralpunkt N verbunden sind. Jedem High-Side-Schalter HS und jedem Low-Side-Schalter LS ist ein Gate-Treiber 8 mit Einzelgate-Ansteuerungen zugeordnet, der jeweils vier unabhängige Ausgänge aufweist, d.h. die zugeordneten Leistungstransistoren der High-Side-Schalter HS und Low-Side-Schalter LS können unabhängig voneinander angesteuert werden.

Die Ansteuerung der Gate-Treiber 8 erfolgt über eine Steuereinheit 9.

Im Traktionsbetrieb werden die Schaltelemente S1 geschlossen und die Schaltelemente S2 geöffnet. Der Pulswechselrichter 3 erzeugt dann aus der Gleichspannung der Hochvoltbatterie 2 drei phasenversetzte Wechselspannungen, die der Elektromaschine 4 zugeführt werden, wobei im Volllast-Betrieb alle vier Leistungstransistoren synchron geschaltet werden, wobei die Schaltfrequenz f1 der Leistungstransistoren beispielsweise 20 - 25 kHz beträgt. Im Schwachlast-Betrieb kann hingegen vorgesehen sein, dass nicht alle Leistungstransistoren geschaltet werden. Hierdurch können Schaltverluste eingespart werden.

Im AC-Ladebetrieb werden die Schaltelemente S1 geöffnet und die Schaltelemente S2 geschlossen, wobei die Steuereinheit 9 den Pulswechselrichter 3 als Gleichrichter ansteuert (ähnlich einem Rekuperationsmodus im Traktionsbetrieb). Dabei werden aber durch die Gate-Treiber 8 nicht alle Leistungstransistoren angesteuert, sondern gegebenenfalls nur einer. Hierdurch kann bei gleicher Leistung der Gate-Treiber 8 die Schaltfrequenz f2 im AC-Ladebetrieb vervielfacht werden, sodass die PFC-Drosseln L1-L3 kleiner ausgelegt werden können. Dabei kann zur Symmetrierung des Alterungsverhaltens der Leistungstransistoren vorgesehen sein, dass diese abwechselnd in einem AC-Ladevorgang angesteuert werden bzw. diese abwechselnd für AC-Ladevorgänge verwendet werden.

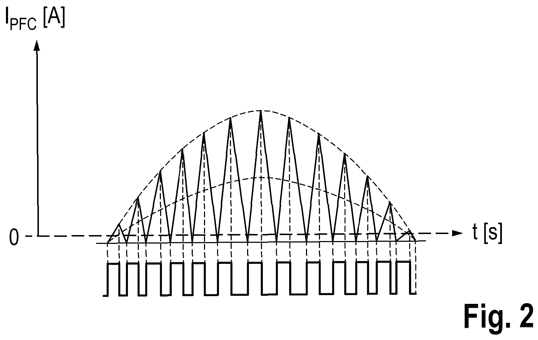

Vorzugsweise werden die Leistungstransistoren im AC-Ladebetrieb mit einem diskontinuierlichen Modulationsverfahren betrieben, wobei der Stromverlauf i_{PFC} durch eine PFC-Drossel L1-L3 in der Fig. 2 dargestellt ist. Dabei ist der Stromverlauf dreieckförmig, wobei der Strom i_{PFC} immer leicht in den negativen Bereich geht (also sein Vorzeichen wechselt), bevor dieser wieder linear ansteigt. Dieser negative Strom führt zu einem Entladen der Ausgangskapazitäten der Leistungstransistoren vor deren Einschalten, sodass die Schaltverluste reduziert werden. Dabei liegen die Ausgangskapazitäten parallel zu den Leistungstransistoren und sind in der Fig. 1 nicht dargestellt, wobei der Entladevorgang über die ebenfalls nicht dargestellten Freilaufdioden erfolgt. In der Fig. 2 ist noch die Einhüllende für die Amplituden und der mittlere Strom gestrichelt dargestellt, wobei unterhalb des Stromes noch die Taktsignale für einen Leistungstransistor dargestellt sind.

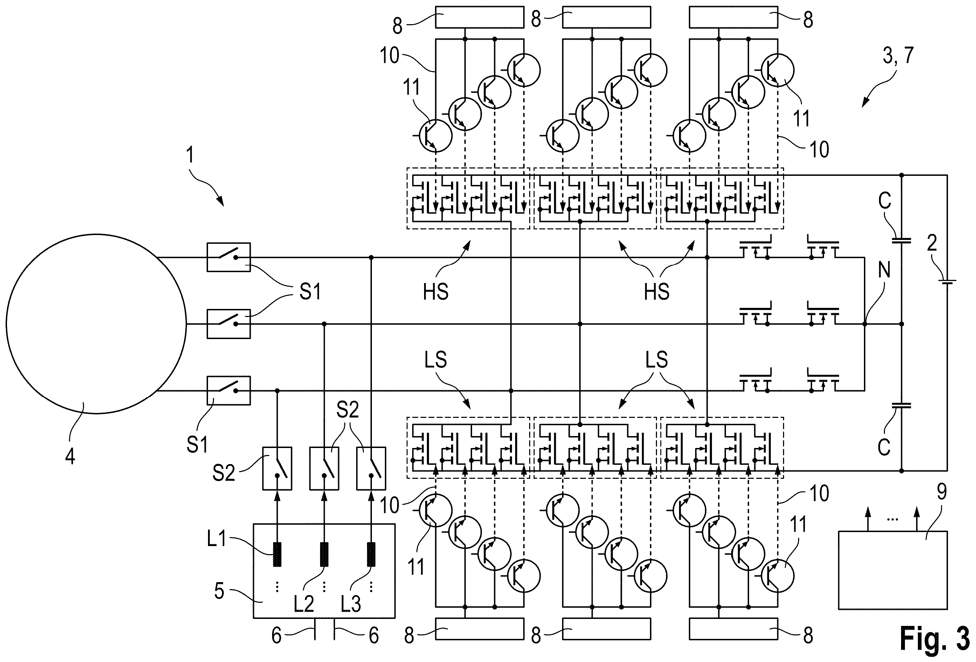

In der Fig. 3 ist eine alternative Ausführungsform dargestellt. Der einzige Unterschied ist, dass die Gate-Treiber 8 keine Einzelgate-Ansteuerung aufweisen, sondern nur einen einzigen Ausgang für alle Leistungstransistoren des zugeordneten High-Side-Schalters HS und Low-Side-Schalters LS. Dieser gemeinsame Ausgang wird dann über Zuleitungen 10 an die jeweiligen Leistungstransistoren bzw. deren Gates verteilt, wobei nur einige der Zuleitungen 10 mit Bezugszeichen versehen sind. In den Zuleitungen 10 sind jeweils weitere Schaltelemente 11 angeordnet. Im dargestellten Beispiel sind die Schaltelemente 11 als Bipolar-Transistoren dargestellt, wobei diese vorzugsweise als MOSFETs ausgebildet sind. Über die Schaltelemente 11 wird anschaulich eine Einzelgate-Ansteuerung nachgebildet, wobei ansonsten auf die Ausführungen zu Fig. 1 Bezug genommen werden kann.

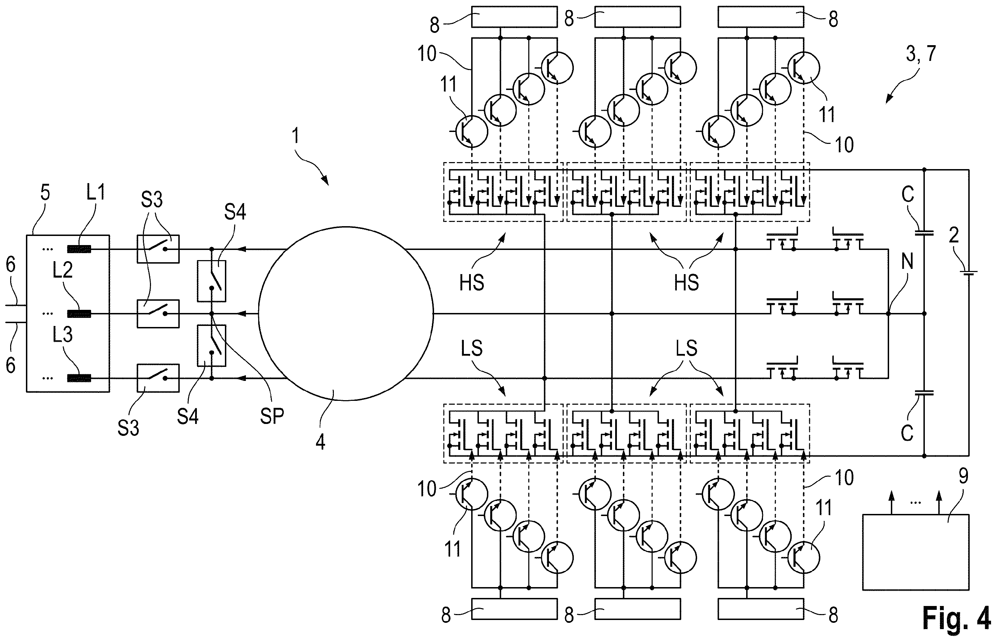

In der Fig. 4 ist eine weitere alternative Ausführungsform für ein Traktionsnetz 1 dargestellt, wobei der Pulswechselrichter 3 analog Fig. 3 aufgebaut ist. Dieser kann aber auch eine Einzelgate-Ansteuerung wie in Fig. 1 aufweisen. Der Unterschied zu Fig. 1 und Fig. 3 ist, dass zwischen den AC-Ladeanschlüssen 6 bzw. der Ladebox 5 mit den PFC-Drosseln L1-L3 und der Elektromaschine 4 Schaltelemente S3 angeordnet sind sowie weitere Schaltelemente S4 zwischen einem Sternpunkt SP der Elektromaschine 4 und deren Phasen. Im Traktionsbetrieb sind die Schaltelemente S3 offen und die Schaltelemente S4 geschlossen. Im AC-Ladebetrieb sind die Schaltelemente S3 geschlossen und die Schaltelemente S4 offen, sodass der Sternpunkt SP aufgetrennt wird. Entsprechend sind die PFC-Drosseln L1-L3 in Reihe geschaltet zu den Induktivitäten der Statorwicklungen, sodass sich die jeweilige Induktivität addiert, sodass die PFC-Drosseln L1-L3 kleiner gewählt werden können oder entfallen können. Die Elektromaschine 4 ist dabei vorzugsweise eine fremderregte Synchronmaschine.

### Bezugszeichenliste

- 1: Traktionsnetz
- 2: Hochvoltbatterie
- 3: Pulswechselrichter
- 4: Elektromaschine
- 5: Ladebox
- 6: AC-Ladeanschluss
- 7: 3-Level-Pulswechselrichter
- 8: Gate-Treiber
- 9: Steuereinheit
- 10: Zuleitung
- 11: Schaltelement
- L1-L3: PFC-Drosseln
- HS: High-Side-Schalter
- LS: Low-Side-Schalter
- C: Kondensator
- N: Neutralpunkt
- SP: Sternpunkt
- S1-S4: Schaltelemente

## Patentansprüche

1. Traktionsnetz (1) für ein Elektrofahrzeug, umfassend eine Hochvoltbatterie (2), einen Pulswechselrichter (3), eine Elektromaschine (4), einen AC-Ladeanschluss (6) und mindestens eine Steuereinheit (9) für den Pulswechselrichter (3), wobei der Pulswechselrichter (3) mindestens drei Halbbrücken aufweist, wobei die Halbbrücken jeweils einen High-Side-Schalter (HS) und einen Low-Side-Schalter (LS) aufweisen, wobei die High-Side-Schalter (HS) und die Low-Side-Schalter (LS) jeweils aus n parallelen Leistungstransistoren bestehen, wobei n ≥ 2 ist, wobei den High-Side-Schalten (HS) und den Low-Side-Schaltern (LS) jeweils mindestens ein Gate-Treiber (8) zugeordnet ist, wobei der mindestens eine Gate-Treiber (8) Einzelgate-Ansteuerungen aufweist, wobei die Einzelgate-Ansteuerungen jeweils einem oder mehreren Leistungstransistoren zugeordnet sind, oder der mindestens eine Gate-Treiber (8) eine Gateansteuerung für die n Leistungstransistoren aufweist, wobei in den Zuleitungen (10) von der Gateansteuerung des Gate-Treibers (8) zu den Gates der Leistungstransistoren jeweils mindestens ein weiteres Schaltelement (11) zugeordnet ist, wobei die Steuereinheit (9) derart ausgebildet ist, im Traktionsbetrieb die Leistungstransistoren mit einer ersten Schaltfrequenz f1 zu betreiben und in einem AC-Ladebetrieb die Leistungstransistoren mit einer zweiten Schaltfrequenz f2 zu betreiben, wobei f2 > f1 ist, wobei im AC-Ladebetrieb einzelne Leistungstransistoren der High-Side-Schalter (HS) und Low-Side-Schalter (LS) nicht angesteuert werden.

2. Traktionsnetz nach Anspruch 1, **dadurch gekennzeichnet, dass** die Steuereinheit (9) derart ausgebildet ist, die Leistungstransistoren im AC-Ladebetrieb mit einem diskontinuierlichen Modulationsverfahren anzusteuern.

3. Traktionsnetz nach Anspruch 2, **dadurch gekennzeichnet, dass** die Steuereinheit (9) derart ausgebildet ist, die Leistungstransistoren im AC-Ladebetrieb mit einem DCM- oder TCM-Modulationsverfahren anzusteuern.

4. Traktionsnetz nach einem der vorangegangenen Ansprüche, **dadurch gekennzeichnet, dass** der Pulswechselrichter (3) als 3-Level-Pulswechselrichter (7) ausgebildet ist.

5. Traktionsnetz nach einem der vorangegangenen Ansprüche, **dadurch gekennzeichnet, dass** zwischen dem AC-Ladeanschluss (6) und dem Pulswechselrichter (3) Schaltelemente (S2) angeordnet sind, wobei das Traktionsnetz (1) derart ausgebildet ist, im AC-Ladebetrieb die Schaltelemente (S2) zu schließen und im Traktionsbetrieb zu öffnen.

6. Traktionsnetz nach einem der Ansprüche 1 bis 4, **dadurch gekennzeichnet, dass** zwischen dem AC-Ladeanschluss (6) und der Elektromaschine (4) Schaltelemente (S3) angeordnet sind und zwischen einem Sternpunkt (SP) der Elektromaschine (4) und den Phasenleitungen Schaltelemente (S4) angeordnet sind, wobei das Traktionsnetz (1) derart ausgebildet ist, im AC-Ladebetrieb die Schaltelemente (S3) zwischen dem AC-Ladeanschluss (6) und der Elektromaschine (4) zu schließen und die Schaltelemente (S4 an dem Sternpunkt (SP) zu öffnen, wobei im Traktionsbetrieb die Schaltelemente (S3) zwischen dem AC-Ladeanschluss (6) und der Elektromaschine (4) geöffnet werden und die Schaltelemente (S4) an dem Sternpunkt (SP) geschlossen werden.

7. Traktionsnetz nach einem der vorangegangenen Ansprüche, **dadurch gekennzeichnet, dass** die Elektromaschine (4) als fremderregte Synchronmaschine ausgebildet ist.

8. Traktionsnetz nach einem der vorangegangenen Ansprüche, **dadurch gekennzeichnet, dass** die Steuereinheit (9) derart ausgebildet ist, dass im Traktionsbetrieb bei Schwach- oder Teillast einzelne Leistungstransistoren der High-Side-Schalter (HS) und Low-Side-Schalter (LS) nicht angesteuert werden.

9. Traktionsnetz nach einem der Ansprüche 4 bis 8, **dadurch gekennzeichnet, dass** die Leistungstransistoren der High-Side-Schalter (HS) und Low-Side-Schalter (LS) als SiC-MOSFETs oder IGBTs ausgebildet sind, wobei die Transistoren im Mittelpfad als GaN HEMTs ausgebildet sind.

10. Traktionsnetz nach einem der vorangegangenen Ansprüche, **dadurch gekennzeichnet, dass** die weiteren Schaltelemente (11) in den Zuleitungen (10) von der Gateansteuerung des Gate-Treibers (8)= zu den Gates der Leistungstransistoren als MOSFETs ausgebildet sind.
